# DEMANDE DE BREVET EUROPEEN

(11) **EP 0 726 087 A1**
(43) Date de publication de la demande: **14.08.1996**
(21) Numéro de dépôt: 96400948.4
(22) Date de dépôt: 31.07.1992
(51) Int. Cl.: B01D 53/04, B01J 8/04

(54) **Adsorbeur à lits d'adsorbants annulaires superposés**

(30) Priorité: 31.07.1991 FR 9109718
(62) Demande divisionnaire de: 92402202.3
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Poteau, Michel, 77230 Dammartin en Goele (FR); Eteve, Sylvie, 92260 Fontenay Aux Roses (FR)
(74) Mandataire: Le Moenner, Gabriel

(57) **Abrégé**

L'adsorbeur, du type à lits annulaires superposés (A, B) comporte, dans sa zone inférieure, une entrée (12) de mélange gazeux communiquant avec un passage annulaire interne (20A) pour le lit inférieur (A), et une sortie (13) de gaz communiquant, par une conduit intérieur (14), avec un passage interne (20B) dans le lit annulaire supérieur (B).

Application notamment à la production d'oxygène.

## Description

La présente invention concerne les unités d'adsorption pour la production ou l'épuration d'un gaz à partir d'un mélange gazeux, utilisables dans les procédés dits PSA (Pressure Swing Adsorption) ou TSA (Temperature Swing Adsorption) en mettant en oeuvre les propriétés d'adsorption préférentielle de certains adsorbants, et plus particulièrement un adsorbeur du type comprenant des lits d'adsorbants annulaires superposés.

Un adsorbeur de ce type est décrit dans le document US-A-4.544.384.

La présente invention a pour objet de proposer un structure d'adsorbeur permettant, sous une configuration compacte et ramassée et avec de faibles coûts de fabrication et de montage, d'optimiser les passages de gaz dans l'adsorbeur et de limiter les volumes morts de gaz et, partant, les pertes de charge en fonctionnement, autorisant donc une productivité notablement améliorée.

Pour ce faire, selon une caractéristique de l'invention, l'adsorbeur comprend une enveloppe tubulaire verticale comportant un lit annulaire inférieur et un lit annulaire supérieur de matériaux particulaires superposés et séparant chacun, radialement, un passage externe d'un passage interne inférieurs et supérieurs respectifs, les passages externes communiquant librement l'un avec l'autre, le passage interne inférieur communiquant avec une entrée de mélange gazeux disposée à la partie inférieure de l'enveloppe, le passage interne supérieur communiquant par un conduit intérieur avec une sortie de gaz disposée à la partie inférieure de l'adsorbeur.

Selon un autre aspect de l'invention, le passage interne est annulaire et délimité intérieurement par une paroi cylindrique montée dans l'enveloppe, de façon à limiter les volumes morts de gaz du côté alimentation.

D'autres caractéristiques et avantages de la présente invention ressortiront de la description suivante de modes de réalisation, donnée à titre illustratif mais nullement limitatif, faite en relation avec les dessins annexés, sur lesquels :
- la figure 1 est une vue schématique en coupe verticale d'un premier mode de réalisation d'un adsorbeur selon l'invention ;
- la figure 2 est une vue analogue à la figure 1 d'un autre mode de réalisation de l'invention ;
- la figure 3 est une vue en coupe transversale suivant le plan de coupe III-III de la figure 2 ;
- la figure 4 est une vue en coupe partielle en coupe verticale de l'extrémité supérieure d'un adsorbeur selon un autre mode de réalisation de l'invention ; et
- la figure 5 est une vue partielle, en coupe verticale, de l'extrémité inférieure d'un autre mode de réalisation d'un adsorbeur selon l'invention.

Dans la description qui va suivre et sur les dessins, les éléments identiques ou analogues portent les mêmes chiffres de référence, éventuellement indicés.

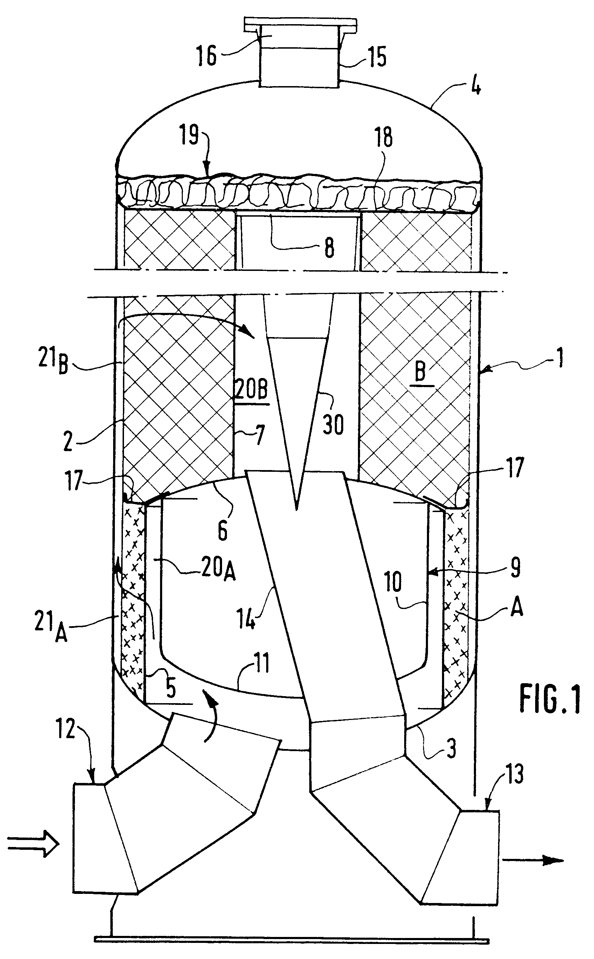

On a représenté sur la figure 1 un adsorbeur, convenant notamment particulièrement pour la production d'oxygène à partir d'air dans un procédé PSA ou VSA. L'adsorbeur comprend une enveloppe tubulaire verticale 1 dans laquelle est disposée, concentriquement, une paroi perforée tubulaire 2, typiquement constituée d'un assemblage concentrique de deux grilles tubulaires ayant des passages traversants ou orifices de dimensions différentes, s'étendant sur la quasitotalité de la hauteur de l'enveloppe 1, à faible distance radiale de cette dernière dont les extrémités sont fermées, dans ce mode de réalisation, par une coupole inférieure 3 et une coupole supérieure 4. Dans la partie inférieure de l'enveloppe 1 est disposée, s'étendant vers le haut à partir de la coupole inférieure 3, une paroi tubulaire perforée 5 dont l'extrémité supérieure est fermée par une cloison transversale intérieure en forme de coupole 6 et qui définit ainsi, avec l'extrémité inférieure de la paroi perforée 2, un espace annulaire inférieur. Sur la cloison transversale 6 est montée verticalement une paroi perforée intérieure tubulaire 7 fermée à son extrémité supérieure par une cloison transversale 8 sensiblement coplanaire avec l'extrémité supérieure de la paroi perforée tubulaire extérieure 2 et définissant ainsi, avec cette dernière, un espace annulaire supérieur. Le volume intérieur défini par la paroi tubulaire perforée inférieure 5 est occupé par une calotte creuse 9 comprenant une paroi tubulaire latérale 10, dont l'extrémité supérieure est fixée à la cloison transversale 6, et un fond arrondi 11 s'étendant à faible distance de la coupole inférieure 3. Dans l'espace défini entre cette dernière et le fond 11 débouche une conduite d'alimentation en mélange gazeux 12 tandis que l'espace intérieur défini par la paroi perforée tubulaire intérieure supérieure 7 communique avec une conduite de décharge de gaz 13 débouchant à la base de l'adsorbeur à l'opposé de la conduite d'alimentation 12, via un conduit intérieur 14 traversant la calotte 9 et la coupole 3. La coupole supérieure 4 comporte un orifice central de chargement 15 obturable par un bouchon 16.

Pour la mise en oeuvre de l'adsorbeur, on introduit tout d'abord, par l'orifice de chargement 15, un premier adsorbant, en l'occurrence, pour la production d'oxygène, des particules d'alumine, jusqu'à remplissage de l'espace annulaire inférieur entre la partie inférieure de la paroi perforée extérieure 2 et la paroi perforée adjacente 5, de façon à constituer ainsi un lit annulaire d'adsorbant inférieur A. On dispose ensuite sur l'extrémité supérieure du lit d'adsorbant A une paroi souple et étanche 17, prenant appui intérieurement sur la cloison transversale 6 et constituée d'une nappe annulaire ou d'une pluralité de feuilles radiales partiellement superposées, par exemple, pour la production d'oxygène, en matériau élastomère tel que celui commercialisé sous l'appellation "HYPALON".
On déverse ensuite par l'orifice de chargement 15 des particules d'un second adsorbant, en l'occurrence, pour la production d'oxygène, des zéolithes, jusqu'à remplir l'espace annulaire supérieur entre la paroi perforée extérieure 2 et la paroi perforée intérieure supérieure 7, de façon à constituer ainsi un lit annulaire d'adsorbant supérieur B de hauteur et d'épaisseur radiales nettement supérieures à celles du lit inférieur A. Le chargement du lit supérieur B assure, via la paroi souple 17, un tassement serré du lit inférieur 8.

Dans le mode de réalisation représenté, on dispose alors sur l'extrémité supérieure annulaire du lit supérieur B et sur la cloison d'extrémité centrale 8 une paroi souple 18 de dimensions transversales légèrement supérieures à celles de l'enveloppe 1.

Dans le mode de réalisation de la figure 1, pour maintenir la partie supérieure du lit B et rattraper directement le tassage de l'adsorbant de ce lit B, une pression est appliquée sur la face supérieure de la paroi souple 18 pour que celle-ci exerce une pression vers le bas sur l'adsorbant B. Dans ce mode de réalisation, la pression est exercée par une couche de sable 19, ou tout autre matériau pesant présentant une forte perte de charge, déversé par l'orifice de chargement 15. Dans ce cas, la paroi souple 18 peut être constituée d'une grille métallique non élastique à mailles fines.

On comprendra aisément le fonctionnement de l'adsorbeur qui vient d'être décrit. Le mélange gazeux contenant le gaz à produire est introduit par la conduite 12, se répartit sensiblement uniformément dans l'espace annulaire interne 20A entre le lit inférieur A et la calotte 9, est contraint de passer radialement à travers le lit inférieur A dans l'espace annulaire externe 20B entre le lit inférieur A et l'enveloppe 1, puis de là, vers le haut, directement dans l'espace annulaire externe 21B autour du lit supérieur B, puis au travers de ce dernier dans le passage interne supérieur 20B pour s'échapper, via le conduit 14, par la conduite d'évacuation 13. On comprendra qu'avec l'agencement sel on l'invention, tout risque de passage direct de gaz entre les lits inférieur A et supérieur B et entre les extrémités supérieures des passages 21B et 20B est supprimé.

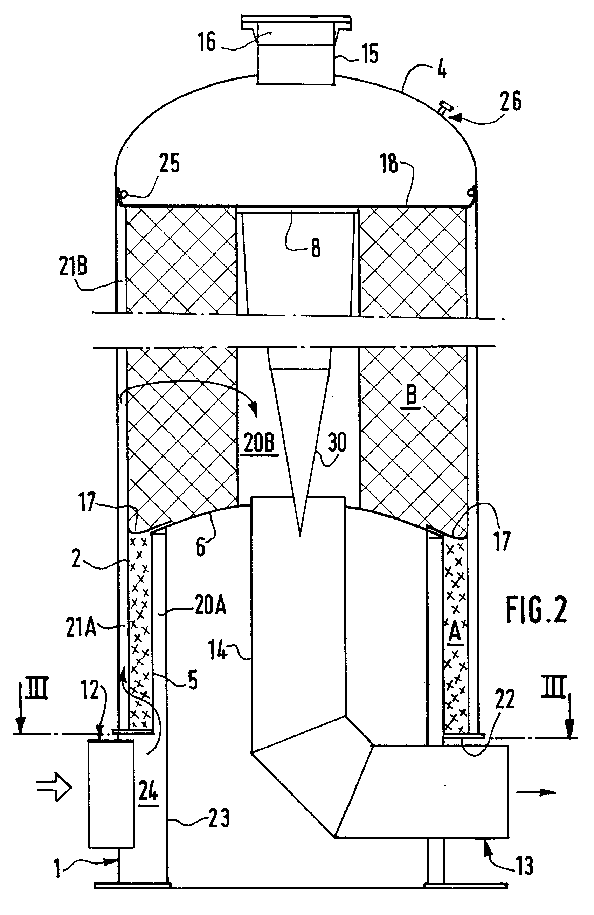

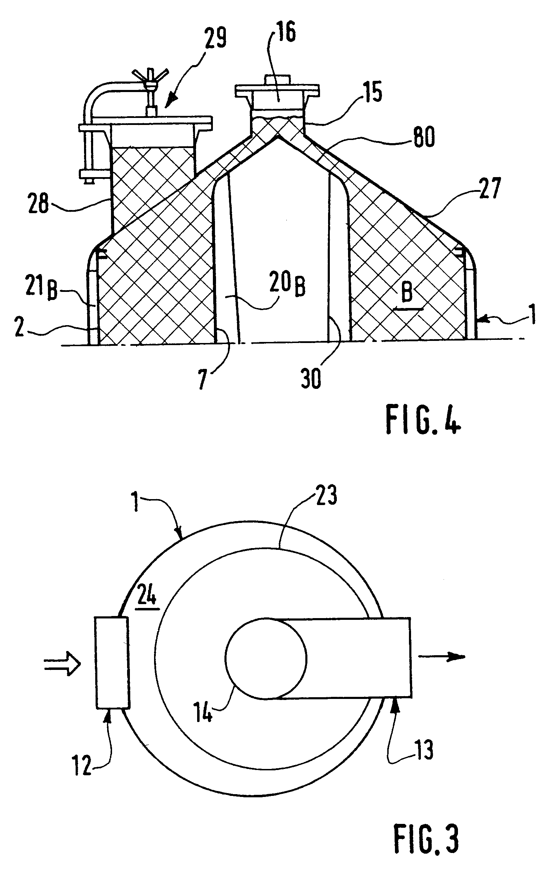

Le mode de réalisation représenté sur la figure 2 diffère de celui représenté sur la figure 1 par les points suivants : l'enveloppe 1 ne comporte pas de coupole de fermeture inférieure 3 mais se prolonge jusqu'à l'embase de l'adsorbeur et les moyens d'application de pression de confinement sur la paroi souple 18 sont ici du type pneumatique. Dans ce mode de réalisation, le lit inférieur A et son passage externe 21A sont délimités inférieurement par une cloison transversale annulaire 22. Le passage interne 20A d'entrée du lit inférieur A est ici délimité intérieurement par une virole 23 s'étendant depuis la cloison transversale 6 jusqu'à la base de l'appareil. Comme on le voit mieux sur la figure 3, la partie inférieure de l'enveloppe 1 présente un diamètre réduit et est désaxée par rapport à l'axe principal de l'appareil dans la direction vers le conduit d'alimentation 12 de façon à définir une chambre annulaire 24 d'alimentation du passage interne 20A ayant une section diminuant progressivement depuis l'entrée 12 jusqu'à l'extrémité diamétralement opposée pour une distribution optimisée du mélange gazeux vers la face d'entrée interne du lit inférieur A. A la partie supérieure de l'adsorbeur, la paroi souple 18, constituée ici d'une membrane étanche, par exemple également dans le matériau élastomère "HYPALON", est pincée par son bord périphérique relevé contre la face interne de l'enveloppe 1 par un anneau de bridage 25 et est plaquée sur l'extrémité supérieure du lit supérieur B par admission d'un gaz sous pression dans la calotte supérieure 4 par une entrée de gaz 26 et prélevé par exemple dans le système incorporant l'appareil. La paroi souple 18 peut être également formée par un ballon gonflable occupant toute la partie haute de l'appareil et pressurisée par un gaz sous pression. Le gaz de pressurisation peut provenir du circuit dit "air instrument" du système et fournissant une pression déterminée par un détendeur. Le gaz peut être également prélevé sur le mélange (par exemple l'air) d'alimentation de l'adsorbeur. Avantageusement, la membrane 18 sera plaquée à la fois par un gaz sous pression et par une couche de sable, comme décrit en relation avec le mode de réalisation de la figure 1.

Dans le mode de réalisation de la figure 4, la coupole supérieure 4 est remplacée par une extrémité d'enveloppe tronconique 27 dont l'angle avec l'horizontale correspond sensiblement à l'angle de talutage observé lors du remplissage d'un bidon par les particules de l'adsorbant B, typiquement, pour des billes de zéolithe, un angle compris entre 35 et 45°. Dans ce mode de réalisation, la paroi perforée cylindrique externe 2 se prolonge vers le haut en contact avec l'extrémité conique 27 et la paroi cylindrique perforée interne supérieure 7 se prolonge vers le haut jusqu'au voisinage de la zone centrale de l'extrémité tronconique 27 et est obturée par une paroi d'extrémité tronconique 80 sensiblement de même angle que l'extrémité tronconique 27. Ainsi, en chargeant au maximum l'espace annulaire supérieur constituant le lit d'adsorbant supérieur B, l'adsorbant occupera l'espace au-dessus de la paroi d'extrémité 80 en éliminant ainsi les risques de passage direct par le haut entre le passage externe 21B et le passage interne 20B. Pour garantir un remplissage et un tassage adéquats, on prévoira avantageusement, dans l'extrémité tronconique supérieure 27, un puits latéral 28 rempli de l'adsorbant B et associé à un moyen mécanique 29 exerçant une pression sur l'adsorbant contenu dans le puits 28.

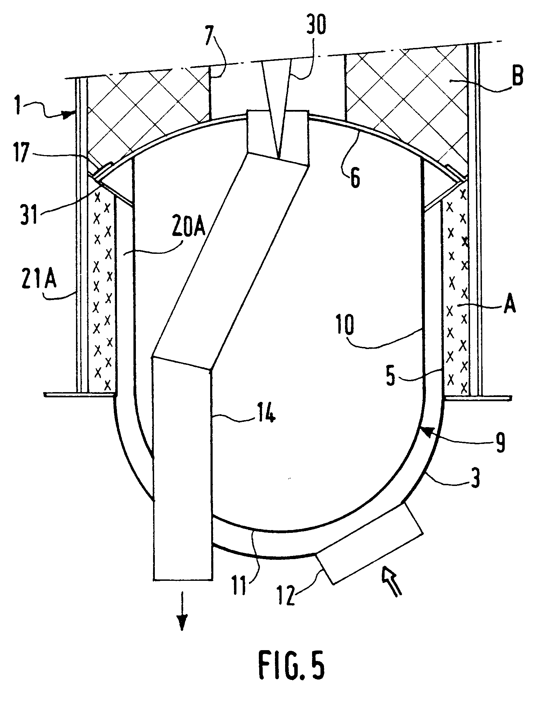

Le mode de réalisation de la figure 5 est analogue à celui décrit en relation avec la figure 1. Pour optimiser la circulation et la répartition du mélange gazeux d'alimentation, la calotte creuse 9 se prolonge vers le bas, au-delà de la partie inférieure du lit A, et présente un fond 11 sensiblement hémisphérique. La coupole inférieure 3 est également sensiblement hémisphérique et s'étend à faible distance du fond 11. La cloison transversale 6 se prolonge radialement vers l'extérieur et se raccorde à une cloison annulaire 31 fermant l'extrémité supérieure de l'espace annulaire interne 20A en formant un "bec" fermant partiellement le passage entre les lits A et B et établissant une zone d'appui et de guidage pour la membrane de séparation 17.

Selon une caractéristique plus particulière de l'invention, comme représenté sur les dessins, pour optimiser l'écoulement dans le passage interne supérieur 20B, celui-ci comporte avantageusement en son centre un noyau à profil évolutif diminuant vers le bas 30 et se terminant dans la conduite interne 14, et définissant un passage interne de section croissant sensiblement linéairement vers le bas.

Quoique la présente invention ait été décrite en relation avec des modes de réalisation particuliers, elle ne s'en trouve pas limitée mais est au contraire susceptible de modifications et de variantes qui apparaîtront à l'homme de l'art.

## Revendications

1. Adsorbeur pour la production ou l'épuration d'un gaz , comprenant une enveloppe tubulaire verticale (1) comportant un lit annulaire inférieur d'adsorbant (A) et un lit annulaire supérieur (B) de matériaux particulaires superposés et séparant chacun radialement, un passage externe (20A ; 20B) d'un passage interne inférieurs et supérieurs respectifs, les passages externes (21A ; 21B) communiquant librement l'un avec l'autre, le passage interne inférieur (20) communiquant avec une entrée de mélange gazeux (12) disposée à la partie inférieure de l'enveloppe, le passage interne supérieur communiquant par un conduit intérieur (14) avec une sortie de gaz (13) disposée à la partie inférieure de l'adsorbeur.

2. Adsorbeur selon la revendication 1, caractérisé en ce que l'extrémité supérieure du passage interne supérieur (20B) est fermée par une paroi intérieure (8) disposée dans la partie supérieure de l'enveloppe.

3. Adsorbeur selon la revendication 1 ou 2, caractérisé en ce que l'extrémité inférieure du passage interne supérieur (20B) est partiellement fermée par une paroi intérieure transversale (6).

4. Adsorbeur selon la revendication 3, caractérisé en ce que le passage interne supérieur (20B) est délimité périphériquement par une paroi tubulaire perforée (7) montée sur la paroi transversale (6).

5. Adsorbeur selon l'une des revendications précédentes, caractérisé en ce que les lits inférieur (A) et supérieur (B) sont délimité extérieurement par une paroi tubulaire perforée (2) disposée à faible distance radiale de l'enveloppe (1).

6. Adsorbeur selon l'une des revendications précédentes, caractérisé en ce que le passage interne inférieur (20A) est annulaire et délimité intérieurement par une paroi cylindrique (10 ; 23) disposée dans la partie inférieure de l'enveloppe (1).

7. Adsorbeur selon la revendication 6, caractérisé en ce que la paroi cylindrique (10 ; 23) est formée par une calotte creuse (9) ayant un fond arrondi (11) s'étendant à faible distance d'une coupole arrondie (3) fermant la base de l'enveloppe (1).

8. Adsorbeur selon l'une des revendications précédentes, caractérisé en ce que le lit inférieur (A) a une épaisseur radiale inférieure à celle du lit supérieur (B).

9. Adsorbeur selon l'une des revendications précédentes, caractérisé en ce qu'il comporte, dans la partie supérieure de l'enveloppe (1), une paroi souple (18) s'étendant transversalement au-delà de la paroi intérieure (8) fermant le passage interne supérieur (20b).

10. Utilisation selon l'une des revendications précédentes, pour la production d'oxygène à partir d'air.
